# EUROPEAN PATENT APPLICATION

(11) **EP 4 234 600 A1**
(43) Date of publication of application: **30.08.2023**
(21) Application number: 22158757.9
(22) Date of filing: 25.02.2022
(51) Int. Cl.: C08G 18/02, C08G 18/18, C08G 18/28, C08G 18/76

(54) **POLYISOCYANATE AND PROCESS FOR PREPARING THE SAME**

(71) Applicant: Covestro Deutschland AG, 51373 Leverkusen (DE)
(72) Inventor: LI, Hongchao, 201206 Shanghai (CN); XU, Lixi, 201206 Shanghai (CN); YU, Xinlong, 200540 Shanhai (CN)
(74) Representative: Levpat

(57) **Abstract**

The present invention relates to a polyisocyanate prepared by the reaction of a system comprising an organic monohydroxy compound, toluene diisocyanate and a catalyst in an organic solvent and a process for preparing the same, a product comprising the polyisocyanate and use thereof as the polyisocyanate component in the polyurethane coatings and adhesives. The polyisocyanate has the following characteristics: a. the isocyanate group content is not less than 6.8 wt%; b. the toluene diisocyanate free monomer content is not more than 0.1 wt%; c. toluene tolerance is not less than 3.0 ml/g; and d. the viscosity is not more than 1000mPa·s; The above weight percentages are relative to the total weight of the polyisocyanate. The polyisocyanate of the present invention has good compatibility.

## Description

### Technical Field

The present invention relates to a polyisocyanate, a process for preparing the same, a product comprising the same, and use thereof as the polyisocyanate component in the polyurethane coatings and adhesivescoatings and adhesives.

### Background technology

Polyisocyanates such as toluene diisocyanate trimer (TDI trimer for short) are often used as cross-linking curing agents for two-component polyurethane coatings and adhesives, which have the advantages of fast drying, high hardness, and excellent chemical resistance. However, traditional TDI trimers have limited compatibility with polyol resins, auxiliary agents, and weak polar solvents (such as toluene and xylene etc.) in some coating formulations, so as to affect the appearance and the performance of two-component polyurethane coatings. On the other hand, how to reduce the free TDI monomer content in the polyisocyanate curing agent has always been a concern of the polyurethane coating industry.

US20040024213 relates to a new process for the preparation of low monomer content trimers based on 2,4-and 2,6-toluene diisocyanate by increasing the reaction temperature of the trimerization reaction and use thereof in coatings. The trimer is prepared from a mixture consisting of 20-80 wt% of a diisocyanate component containing at least 80 wt% of 2,4-and 2,6-toluene diisocyanate and 20-80 wt% of a solvent and/or a diluent and a phenolic catalyst containing a dialkylaminomethyl group.

US5064960 relates to a process for preparing a composition comprising an isocyanurate-containing polyisocyanate by introducing an organic alcohol compound, the composition is dissolved in a solvent inert to an isocyanate group, and the said process comprises a) reacting 2.5% to 7% of starting diisocyanate groups based on 2,4-diisocyanate or isocyanate groups of 2,4-diisocyanate and 2,6-diisocyanate with a mixture of monohydric alcohols; b) adding a sufficient amount of an organic solvent inert to an isocyanate group, before, during or after step a) to form a 30% to 70% solution of the urethanized diisocyanate; c) subsequently partially trimerizing the said urethanized diisocyanate groups in the presence of a catalyst capable of accelerating the trimerization of isocyanate groups; and d) terminating the trimerization reaction by adding a catalyst poison when the unreacted toluene diisocyanate content is below 0.5 wt%.

It is desirable to develop a toluene diisocyanate trimer concurrently having high compatibility and low free monomer content.

### Summary of the Invention

The purpose of the present invention is to provide a polyisocyanate prepared by the reaction of a system comprising an organic monohydroxy compound, toluene diisocyanate and a catalyst in an organic solvent, a process for preparing the same, a product comprising the same and use thereof as the polyisocyanate component in the polyurethane coatings and adhesives.

The polyisocyanate prepared by the reaction of a system comprising an organic monohydroxy compound, toluene diisocyanate and a catalyst in an organic solvent according to the present invention has the following characteristics:
a. the isocyanate group content is not less than 6.8 wt%;
b. the toluene diisocyanate free monomer content is not more than 0.1 wt%;
c. toluene tolerance is not less than 3.0 ml/g; and
d. the viscosity is not more than 1000 mPa•s;

The above weight percentages are relative to the total weight of the polyisocyanate.

According to one aspect of the invention, there is provided a process for preparing a polyisocyanate provided according to the invention, comprising:
I. reacting toluene diisocyanate and a catalyst in the presence of an organic solvent until the isocyanate group content of the reactants is 9 wt% to 11 wt%;
II. cooling the reactant to -5°C to 35°C and adding an organic monohydroxy compound, or adding an organic monohydroxy compound and cooling the reactant to -5°C to 35°C; and
III. continuing the reaction until the toluene diisocyanate free monomer content is not more than 0.1 wt% to terminate the reaction to obtain the polyisocyanate.

According to one aspect of the invention, there is provided a product comprising the polyisocyanate provided in accordance with the invention.

According to one aspect of the invention, there is provided the use of the polyisocyanate provided according to the invention as the polyisocyanate component in the polyurethane coatings and adhesives.

According to one aspect of the present invention, there is provided the use of the polyisocyanate provided according to the present invention as a polyisocyanate component in a polyurethane adhesive.

According to one aspect of the present invention, there is provided a product comprising the polyisocyanate obtained from the preparation with the process provided according to the present invention.

### Detailed description

The present invention provides a polyisocyanate prepared by the reaction of a system comprising an organic monohydroxy compound, toluene diisocyanate and a catalyst in an organic solvent, having the following characteristics:
a. the isocyanate group content is not less than 6.8 wt%; b. the toluene diisocyanate free monomer content is not more than 0.1 wt%; c. toluene tolerance is not less than 3.0 ml/g; and d. the viscosity is not more than 1000 mPa•s; the above weight percentages are relative to the total weight of the polyisocyanate. The present invention also provides a process for preparing the polyisocyanate, a product containing the same, and use thereof as a polyisocyanate component in a polyurethane coatings and adhesives.

The term "curing" refers to the process by which a coatings or adhesive transfers from a liquid state to a cured state.

The term "adhesive" refers to a mixture comprising a curable and tacky chemical component, also used as synonyms for binder and/or sealant and/or sticker and/or glue.

The term "polyurethane" refers to polyurethane urea and/or polyurethane polyurea and/or polyurea and/or polythiourethane.

The term "toluene diisocyanate" refers to a collective name for 2,4-toluene diisocyanate, 2,6-toluene diisocyanate and a mixture of 2,4-toluene diisocyanate and 2,6-toluene diisocyanate.

The polyisocyanates of the present invention are actually in a solution form, wherein the organic solvents may be those known in the art.

The solid component of the polyisocyanate of the present invention refers to the solid components of the polyisocyanate, the non-volatile compounds of the polyisocyanate, or the effective components of the polyisocyanate.

### System

When calculating the total weight of the system of the present invention, the weight of the organic solvent is also included.

### Polyisocyanate

The toluene diisocyanate free monomer content of the polyisocyanate of the present invention is determined by gas chromatography using an internal standard according to DIN EN ISO 10283:2007-11.

The isocyanate group (NCO) content of the polyisocyanate of the present invention is determined with a titration method according to DIN-EN ISO 11909: 2007-05, wherein the measured data includes the free NCO content.

The viscosity of polyisocyanate of the present invention is measured according to DIN EN ISO 3219:1994-10 by using a viscometer with a MV-DIN standard rotator (HAAKE Viscotester VT550) at 23°C. The viscosity of the polyisocyanate of the present invention is measured at a polyisocyanate solid content of 50 wt%. If the solid content of the polyisocyanate to be measured is not 50 wt%, the solid content of the polyisocyanate to be measured should be pre-adjusted to 50 wt% (based on the total weight of the polyisocyanate to be measured) before the viscosity measurement.

The solid component content of the polyisocyanate of the present invention (NVC) is measured according to DIN EN ISO 3251:2008-06 with a drying temperature of 120°C and a time period of 2 hours, the testing tray diameter of 75 mm, and the weighing amount of 2.00 g +/-0.02.

The toluene tolerance of the polyisocyanate of the present invention is determined with reference to the universal methods in the coatings industry. The specific method is as follows: weighing a certain mass of polyisocyanate (5-10 g) and placing it in a dry glass beaker, adding toluene dropwise to the beaker under magnetic stirring until the original clear and transparent solution in the beaker appears turbid, recording the volume of toluene added, dividing the toluene volume by the mass of the polyisocyanate sample to obtain the toluene tolerance of the polyisocyanate in ml/g.

The toluene diisocyanate free monomer content of the polyisocyanate of the present invention is determined by gas chromatography using an internal standard according to DIN EN ISO 10283:2007-11.

The color of the polyisocyanate of the present invention is measured by using Lico500.

The isocyanate group content of the polyisocyanate is preferably 6.8 wt%-10 wt%, most preferably 6.8 wt%-7.2 wt%, relative to the total weight of the polyisocyanate.

The toluene tolerance of the said polyisocyanate is preferably not less than 3.0 ml/g, further preferably 3.0 ml/g-20.0 ml/g, more preferably 4.0 ml/g-10.0 ml/g, most preferably 4.0 ml/g-9.0 ml/g.

The viscosity of the said polyisocyanate is preferably not more than 1000 mPa·s, further preferably 400 mPa·s-1000 mPa·s, more preferably 400 mPa·s-800 mPa·s, most preferably 400 mPa·s-700 mPa·s.

The Hazen color of the polyisocyanate is preferably 20-80, more preferably 25-55, and most preferably 27-50.

The solid component content of the polyisocyanate is preferably 30 wt%-70 wt%, further preferably 45 wt%-55 wt%, most preferably 49 wt%-53 wt%, relative to the total weight of the said polyisocyanate.

The detection limit for the toluene diisocyanate free monomer content of the said polyisocyanate is preferably 0.1 wt%, relative to the total weight of the said polyisocyanate.

### Toluene diisocyanate

The amount of the said toluene diisocyanate is 20 wt%-70 wt%, further preferably 30 wt%-60 wt%, most preferably 40 wt%-50 wt%, relative to the total weight of the system.

The toluene diisocyanate is preferably toluene-2,4-diisocyanate or a mixture of toluene-2,4-diisocyanate and toluene-2,6-diisocyanate.

The amount of the toluene-2,4-diisocyanate is preferably not less than 60 wt%, most preferably not less than 80 wt%, relative to the total weight of the toluene diisocyanate.

The system may further comprise a compound having an isocyanate group other than toluene diisocyanate.

The amount of the said toluene diisocyanate is preferably not less than 60 wt%, further preferably not less than 90 wt%, particularly preferably not less than 95 wt%, most preferably 100 wt%, relative to the total weight of all of the compounds having an isocyanate group in the said system.

The compound having an isocyanate group other than toluene diisocyanate in the said system can be any compound having an isocyanate group, for example, monoisocyanate having an aliphatic, alicyclic, araliphatic or aromatic bonded isocyanate group, diisocyanate, triisocyanate and/or higher functionality isocyanate having an aliphatic, alicyclic, araliphatic and/or aromatic bonded isocyanate group, and modified isocyanate derived from the above-mentioned diisocyanate and triisocyanate and prepared by oligomerization e.g. trimerization.

The monoisocyanate having an aliphatic, alicyclic, araliphatic or aromatic bonded isocyanate group is preferably one or more of the following: stearyl isocyanate and naphthyl isocyanate.

The said diisocyanate having an aliphatic, alicyclic, araliphatic and/or aromatic bonded isocyanate group is preferably one or more of the following: 1,4-diisocyanato-butane, 1,5-diisocyanato-pentane (PDI), 1,6-diisocyanato-hexane (HDI), 2-methyl-1,5-diisocyanato-pentane, 1,5-diisocyanato-2,2-dimethylpentane, 2,2,4- or 2,4,4-trimethyl-1,6-diisocyanatohexane, 1,10-diisocyanatodecane, 1,3-and 1,4-diisocyanatocyclohexane, 1,3-and 1,4-bis(isocyanatomethyl)cyclohexane, 1-isocyanato-3,3,5-trimethyl-5-isocyanatomethylcyclohexane (isophorone diisocyanate, IPDI), 4,4'-diisocyanatodicyclohexylmethane, 1-isocyanato-1-methyl-4 (3)-isocyanatomethylcyclohexane (IMCI), bis(isocyanatomethyl)norbornane, 2,4'- and 4,4'-diisocyanatodiphenylmethane and higher homologues, 1,5-diisocyanatonaphthalene and dipropylene glycol diisocyanate.

The said triisocyanate and/or higher functionality isocyanate are/is preferably one or more of the following: 4-isocyanatomethyloctane-1,8-diisocyanate (nonane triisocyanate) and undecane-1,6,11-triisocyanate.

The compound having an isocyanate group other than toluene diisocyanate in the said system is most preferably one or more of the following: 1,5-diisocyanato-pentane (PDI), 1,6-diisocyanato-hexane (HDI) and modified isocyanates derived from the above-mentioned diisocyanates and prepared by oligomerization, such as trimerization.

When the system contains both toluene diisocyanate and a compound having an isocyanate group other than toluene diisocyanate, the total amount of any still existing and unreacted monomeric isocyanate (i.e., the total of the amount of the unreacted excessive toluene diisocyanate and the amount of the unreacted excessive compound having an isocyanate group other than toluene diisocyanate) is preferably 0.1wt% or less, most preferably 0.08wt% or less, relative to the total weight of the polyisocyanate.

The content of the unreacted excessive compound having an isocyanate group other than the said toluene diisocyanate of the present invention is determined by gas chromatography using an internal standard according to DIN EN ISO 10283:2007-11.

The toluene diisocyanate is preferably prepared by the gas phase phosgenation.

2-chloro-6-isocynato-methylcyclohexadiene (CIMCH) can exist as three forms of double bond isomers, which can be contained in TDI in different proportions. They are formed, for example, in the preparation of TDI from 1-amino-2-methyl-cyclohexenone contained in toluene diamine (TDA) used. The said 1-amino-2-methyl-cyclohexenone can be formed by the partial ring hydrogenation (Kernhydrierung) of TDA and replacing the amino functional group with water in the preparation of TDA from dinitrotoluene (DNT). It is also possible to introduce a keto functional group proportionally by oxidative attack when preparing DNT by nitration of toluene, wherein nitro cresol is firstly formed, which then is able to form the above 1-amino-methyl-2-cyclohexenone in subsequent hydrogenation.

The toluene diisocyanate preferably has a 2-chloro-6-isocyanato-methylcyclohexyldiene content of less than 5 wt ppm, more preferably not higher than 3 wt ppm. This grade of TDI can be obtained by purposively removing 2-chloro-6-isocyanato-methylcyclohexadiene from a pre-concentrated TDI-crude solution by distillation, for example by means of a dividing wall distillation column as described in EP 1 413 571 B1. However, toluene diisocyanate is particularly preferably prepared by the gas phase phosgenation of TDA, and it has a 2-chloro-6-isocynato-methylcyclohexadiene content lower than the detection limit of 1 wt ppm. This grade of toluene diisocyanate is available, for example, from the Caojing production site of Covestro Deutschland AG, China.

Two independent analytical methods have been used for the definitive characterization of the component 2-chloro-6-isocynato-methylcyclohexadiene. By means of the combined gas chromatography-mass spectrometry, the 169 g/mol molecular weight is allocated to three hitherto unknown compounds (CIMICH, including two isomers). It is possible to obtain further structural information from the fragmentation in a manner known to the person skilled in the art. By means of complex nuclear resonance spectroscopy experiments (¹H-NMR, ¹H-COSY, ¹H-, ¹H-TOCSY and ¹H-, ¹³C-HMBC), the structures indicated below can be allocated to the three components with m/z 169.

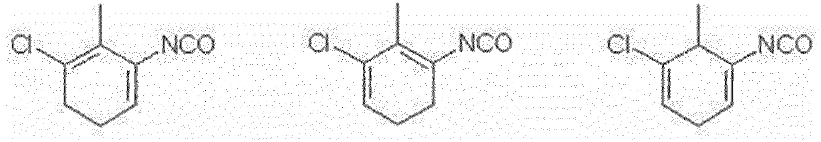

By purposive method development, it is possible to set the detection limit of the isomers of CIMICH by means of gas chromatography, using an Optima 5 HT column (60 m length, 0.25 mm inner diameter, 0.25 µm film thickness) from Macherey-Nagel in an HP Series 6890 gas chromatograph from Hewlett Packard, at 1 wt·ppm.

### Organic monohydroxy compound

The said organic monohydroxy compound is preferably an organic monoalcohol; further preferably an organic monoalcohol having a carbon atom number of not less than 4, still preferably an organic monoalcohol having a carbon atom number of not less than 6, most preferably one or more of the following: decanol, dodecanol and an alkyl monoalcohol containing higher carbon atoms.

The amount of the said organic monohydroxy compound is preferably 1 wt%-20 wt%, further preferably 2 wt%-10 wt%, most preferably 2 wt%-6 wt%, relative to the total weight of the system.

### Catalyst

The trimerization catalyst is used to initiate and accelerate the trimerization reaction of the system. The said trimerization catalyst preferably has a phenolic OH group attached to an aromatic hydrocarbon and a N,N-dialkylaminomethyl group (alkyl: an independent alkyl or alkylene chain interrupted by oxygen or sulfur and containing up to 18 carbon atoms). These groups can be distributed in two or more molecules on one or more benzene-containing aromatic hydrocarbons, such as those described in CN1470509A. The catalyst is further preferably a compound containing both a hydroxyl group and a dialkylaminomethyl group in a single molecule, and most preferably a catalyst system in which a dialkylaminomethyl group (the alkyl group is a C₁-C₃ chain) is located in the ortho position of the aromatic hydroxyl group. Examples that may be mentioned include the following Mannich bases, obtained on the basis of e.g. phenol, p-isononylphenol or bisphenol A, e.g. according to DE-A 24525319, by warming 188 parts by weight of phenol with 720 parts by weight of 25% dimethylamine aqueous solution and 425 parts by weight of 40% formaldehyde solution at 80°C for two hours, separating the aqueous phase and distilling the organic phase at 90°C /10 torr.

The amount of the catalyst is preferably 0.005 wt%-0.5 wt%, further preferably 0.01 wt%-0.3 wt%, most preferably 0.02 wt%-0.2 wt%, relative to the total weight of the system.

### Organic solvent

The said organic solvent is preferably one or more of the following: cyclohexanone, methyl isobutyl ketone, dimethylformamide, dimethylacetamide, ethyl acetate, n-propyl acetate, isopropyl acetate, n-butyl acetate and isobutyl acetate.

The amount of the said organic solvent is preferably 30 wt%-70 wt%, further preferably 45 wt%-55 wt%, most preferably 47 wt%-51 wt%, relative to the total weight of the solid components of the system.

### Process

A process for preparing the polyisocyanate of the present invention comprises:
I. reacting toluene diisocyanate and a catalyst in the presence of an organic solvent until the isocyanate group content of the reactants is 9 wt% to 11 wt%;
II. cooling the reactants to -5°C to 35°C, and adding an organic monohydroxy compound; and
III. continuing the reaction until the toluene diisocyanate free monomer content is not more than 0.1 wt% to terminate the reaction to obtain the polyisocyanate.

A process for preparing the polyisocyanate of the present invention comprises:
I. reacting toluene diisocyanate and a catalyst in the presence of an organic solvent until the isocyanate group content of the reactants is 9 wt% to 11 wt%;
II. adding an organic monohydroxy compound, and cooling the reactants to -5°C to 35°C; and
III. continuing the reaction until the content of the toluene diisocyanate free monomer is not more than 0.1 wt% to terminate the reaction to obtain the polyisocyanate.

The catalyst is preferably a trimerization catalyst.

The reaction temperature of the said step I is preferably 45°C-85°C.

Preferably in the said step II, the reactant is cooled to 5°C-30°C, most preferably in the said step II, the reactant is cooled to 15°C-30°C.

Preferably in the said step III, an reaction terminator is added to terminate the reaction.

The terminator is preferably one or more of the following: dibutyl phosphate, monobutyl phosphate, phosphoric acid, methyl tosylate, dimethyl sulfate, benzoyl chloride and isophthaloyl dichloride.

The amount of the said terminator is preferably 0.006 wt%-0.6 wt%, further preferably 0.015 wt%-0.4 wt%, most preferably 0.03 wt%-0.3 wt%, relative to the total weight of the system.

The process for preparing the polyisocyanate preferably comprises:
I. reacting toluene diisocyanate and a catalyst in the presence of an organic solvent at 45°C-85°C until the isocyanate group content of the reactants is 9 wt% to 11 wt%;
II. cooling the reactants to 5°C-30°C and adding an organic monohydroxy compound, or adding an organic monohydroxy compound and cooling the reactant to 5°C-30°C;
III. continuing the reaction until the toluene diisocyanate free monomer content is not more than 0.1 wt%, and terminating the reaction to obtain the polyisocyanate.

The process for preparing the polyisocyanate still preferably comprises:
I. reacting toluene diisocyanate and a trimerization catalyst in the presence of an organic solvent at 45°C-85°C until the isocyanate group content of the reactants is 9 wt% to 11 wt%;
II. cooling the reactant to 5°C-30°C and adding an organic monohydroxy compound, or adding an organic monohydroxy compound and cooling the reactants to 5°C-30°C;
III. continuing the reaction until the toluene diisocyanate free monomer content is not more than 0.1 wt%, and terminating the reaction to obtain the polyisocyanate.

The process for preparing the polyisocyanate still preferably comprises:
I. reacting toluene diisocyanate and a trimerization catalyst in the presence of an organic solvent at 45°C-85°C until the isocyanate group content of the reactants is 9 wt% to 11 wt%;
II. cooling the reactant to 15°C-30°C and adding an organic monoalcohol, or adding an organic monoalcohol and cooling the reactants to 15°C-30°C;
III. continuing the reaction until the toluene diisocyanate free monomer content is not more than 0.1 wt%, and adding a terminator to terminate the reaction to obtain the polyisocyanate.

The process for preparing the polyisocyanate most preferably comprises:
I. reacting toluene diisocyanate and a trimerization catalyst in the presence of an organic solvent at 50°C-75°C until the isocyanate group content of the reactants is 9 wt% to 11 wt%;
II. cooling the reactant to 15°C-30°C and adding an organic monoalcohol, or adding an organic monoalcohol and cooling the reactants to 15°C-30°C;
III. continuing the reaction until the toluene diisocyanate free monomer content is not more than 0.1 wt%, and adding a terminator to terminate the reaction to obtain the polyisocyanate.

The toluene diisocyanate monomer content of the reactants is determined by gas chromatography using an internal standard according to DIN EN ISO 10283:2007-11.

The isocyanate group (NCO) content of the reactant is determined with a titration method according to DIN-EN ISO 11909: 2007-05, wherein the measured data includes the free NCO content.

Preferably, in step I of the process, toluene diisocyanate and the catalyst are reacted in the presence of an organic solvent until the isocyanate group content of the reactants is 9 wt%-10 wt%.

The process can be carried out batchwise or continuously.

### Product

The product is preferably selected from polyurethane coatings and polyurethane adhesives.

The polyurethane coatings and adhesives may be a one-component polyurethane coatings and adhesives or a two-component polyurethane coatings and adhesives.

The two-component polyurethane coatings and adhesives may comprise the polyisocyanate of the invention, and one or more of the following known in the polyurethane coatings and adhesives technology: polyhydroxy polyesters, polyhydroxy polyethers, polyhydroxy polyacrylates, and optional low molecular weight polyols.

The two-component polyurethane coatings and adhesives may also comprise the polyisocyanate of the invention and one or more of the following: a blocked polyketimine and a polyamine of an oxazolidine, wherein the equivalent ratio of the isocyanate group to the isocyanate-reactive group is 0.8:1-3.0:1, preferably 0.9:1-1.1:1.

The two-component polyurethane coatings and adhesives may further comprise a catalyst. The catalyst is used to accelerate the curing of the polyurethane coatings and adhesives. The catalyst may be those known in the art, such as an amine such as triethylamine, pyridine, picoline, benzyldimethylamine, N,N'-dimethylpiperazine or a metal salt such as ferric chloride (III), zinc chloride, zinc 2-ethylhexanoate, stannum (II) 2-ethylhexanoate, dibutyl stannum (IV) dilaurate or molybdenum glycolate.

The polyisocyanate prepared by reacting a system comprising an organic monohydroxy compound, toluene diisocyanate and a catalyst in an organic solvent according to the present invention not only has a high content of the isocyanate group, a low content of toluene diisocyanate free monomer (the toluene diisocyanate free monomer content in the polyisocyanate not more than 0.1 wt%) and a lower viscosity, but also has good toluene tolerance.

The polyisocyanate of the present invention contains a low level of toluene diisocyanate monomer content, which improves occupational hygiene, particularly occupational hygiene in manual applications, and extends the application field of the polyisocyanate of the present invention.

The higher the isocyanate group content of the polyisocyanate, the lower the use cost in practical application. The higher the toluene tolerance, the better the compatibility of the polyisocyanate; the lower the viscosity, the less organic solvent needs to be added during the use of the polyisocyanate, or even no need to add an organic solvent to dilute it, effectively reducing the VOC emission; the lower the color value, the closer to colorless the polyisocyanate.

It was surprisingly found in the present invention that carrying out the trimerization of the diisocyanate at a certain temperature until the isocyanate group content reached a certain stage and then adding the organic monohydroxy compound to carry out the alcohol modification and reduce the reactant temperature are helpful to obtain the polyisocyanate concurrently having high isocyanate group content, low free monomer content, low viscosity and high toluene tolerance.

### Examples

Unless defined otherwise, all technical and scientific terms used herein have the same meanings as commonly understood by those skilled in the art to which this invention belongs. To the extent that the definitions of terms used in this specification conflict with meanings commonly understood by those skilled in the art to which this invention belongs, the definitions set forth herein prevail.

Unless otherwise indicated, all numbers expressing quantities of ingredients, reaction conditions, and the like used in the specification and claims are to be understood as being modified by the term "about". Accordingly, unless indicated to the contrary, the numerical parameters set forth herein are approximations that can vary depending upon the desired properties to be obtained.

The expression "and/or" as used herein means one or all of the mentioned elements.

As used herein, "not less than," "not more than," "...or more", and "... or less" include the numerical value referred to itself, unless otherwise stated.

The use of "comprise" and "contain" herein encompasses the presence of the mentioned elements alone and the presence of other elements not mentioned in addition to the mentioned elements.

The analytical measurements of the present invention are carried out at 23°C unless otherwise stated.

A polyisocyanate with a Hazen color value of not more than 80 was considered acceptable. The smaller the color value, the closer the polyisocyanate is to colorless, and the higher the color value, the more yellow the polyisocyanate is.

### Raw materials and reagents

DESMODUR^{®} T 80: toluene diisocyanate, containing about 80wt% of 2,4-toluene diisocyanate and 20wt% of 2,6-toluene diisocyanate, commercially available from Covestro Polymer (China) Co. Ltd..
DESMODUR^{®} T 100: 2,4-toluene diisocyanate, commercially available from Covestro Polymer (China) Co. Ltd..
Ethyl acetate: commercially available from Sigma Aldrich (Shanghai) Trading Co., Ltd..
Lauryl alcohol (dodecanol): commercially available from Sigma Aldrich (Shanghai) Trading Co., Ltd..
Catalyst 1: According to DE-A 24525319, 188 parts by weight of phenol, 720 parts by weight of a 25% aqueous dimethylamine solution and 425 parts by weight of a 40% formaldehyde solution were heated at 80°C for two hours, the aqueous phase was separated and the organic phase was distilled at 90°C/10 torr to obtain a Mannich base catalyst, and the obtained catalyst was dissolved in an xylene solvent to obtain a catalyst solution with a concentration of 25%, i.e., catalyst 1.
Catalyst 2: 2,4,6-tris(dimethylaminomethyl)phenol (DMP30, commercially available from Shanghai Macklin Biochemical Co., Ltd) is dissolved in an xylene solvent to obtain a catalyst solution with a concentration of 40%, i.e., catalyst 2.
Methyl p-toluene sulfonate: a terminator, commercially available from Sigma Aldrich (Shanghai) Trading Co., Ltd.
Dibutyl phosphate (DBP): a terminator, commercially available from Sigma Aldrich (Shanghai) Trading Co., Ltd.
Antioxidant: Irganox 1135, commercially available from BASF.

### Examples and Comparative Examples

### Example 1

397 g of DESMODUR^{®} T 100 was added to a four-neck brown reaction vesselvessel with a condenser and a nitrogen inletinlet. 0.5 g of antioxidant and 439 g of butyl acetate were added in sequence, the condensed water was turned on, and the stirring and heating device was turned on. When the temperature rose to 55°C, 2.12 g of catalyst 1 was added to catalyze the trimerization reaction. The NCO content of the system was measured by sampling. When the NCO content dropped to 10.0 wt%, 44 g of lauryl alcohol was added dropwise to carry out the reaction. After the dropwise addition, the reactant was cooled to 25°C to continue the reaction. After about 46 hours, when the toluene diisocyanate free monomer content of the system dropped to 0.1 wt% or less, 2.6 g of DBP was added to the system, and after stirring for 1-2 hours, the reaction mixturemixture was discharged to obtain polyisocyanate 1.

### Example 2

397 g of DESMODUR^{®} T 100 was added to a four-neck brown reaction vessel with a condenser and a nitrogen inlet. 0.63 g of antioxidant and 440 g of butyl acetate were added in sequence, the condensed water was turned on, and the stirring and heating device was turned on. When the temperature rose to 55°C, 2.4 g of catalyst 1 was added to catalyze the trimerization reaction. The NCO content of the system was measured by sampling. When the NCO content dropped to 9.63 wt%, the reaction mixture was cooled to 25°C. 44.1 g of lauryl alcohol was added dropwise to carry out the reaction. After the dropwise addition, the reaction was continued under stirring. When the toluene diisocyanate free monomer content of the system dropped to 0.1 wt% or less, 2.6 g of DBP was added to the system, and after stirring for 1-2 hours, the reaction mixturewas discharged to obtain polyisocyanate 2.

### Example 3

397 g of DESMODUR^{®} T 100 was added to a four-neck brown reaction vessel with a condenser and a nitrogen inlet. 0.50 g of antioxidant and 440 g of butyl acetate were added in sequence, the condensed water was turned on, and the stirring and heating device was turned on. When the temperature rose to 55°C, 4.8 g of catalyst 1 was added to catalyze the trimerization reaction. The NCO content of the system was measured by sampling. When the NCO content dropped to 9.79 wt%, the reaction was cooled to 30°C. 25.27 g of lauryl alcohol was added dropwise to carry out the reaction. After the dropwise addition, the reaction was continued under stirring. When the toluene diisocyanate free monomer content of the system dropped to 0.1 wt% or less, 5.0 g of DBP was added to the system, and after stirring for 1-2 hours, the reaction mixturewas discharged to obtain polyisocyanate 3.

### Example 4

397 g of DESMODUR^{®} T 100 was added to a four-neck brown reaction vessel with a condenser and a nitrogen inlet. 0.50 g of antioxidant and 440 g of butyl acetate were added in sequence, the condensed water was turned on, and the stirring and heating device was turned on. When the temperature rose to 55°C, 2.7 g of catalyst 2 was added to catalyze the trimerization reaction. The NCO content of the system was measured by sampling. When the NCO content dropped to 9.79 wt%, the reaction was cooled to 15°C. 35 g of lauryl alcohol was added dropwise to carry out the reaction. After the dropwise addition, the reaction was continued under stirring. When the toluene diisocyanate free monomer content of the system dropped to 0.1 wt% or less, 6.95 g of DBP was added to the system, and after stirring for 1-2 hours, the reaction mixturewas discharged to obtain polyisocyanate 4.

### Comparative Example 1

351 g of DESMODUR^{®} T 100 was added to a four-neck brown reaction vessel with a condenser and a nitrogen inlet. 0.5 g of antioxidant, 388 g of butyl acetate were added in sequence, the condensed water was turned on, and the stirring and heating device was turned on. When the temperature rose to 55°C, 2.12 g of catalyst 1 was added to catalyze the trimerization reaction. The isocyanate group content (NCO content) of the system was measured by sampling. When the NCO content dropped to 9.1 wt%, the reaction was cooled to 42°C. 38.7 g of lauryl alcohol was added dropwise and the stirring was continued. After about 15 hours, when the NCO content of the system dropped to 7.03 wt%, 2.3 g of DBP was added to the system, and after stirring for 1-2 hours, the reaction mixture was discharged to obtain comparative polyisocyanate 1.

### Comparative Example 2

398 g of DESMODUR^{®} T 100 was added to a four-neck brown reaction vessel with a condenser and a nitrogen inlet. 0.5 g of antioxidant and 440 g of butyl acetate were added in sequence, the condensed water was turned on, and the stirring and heating device was turned on. When the temperature rose to 50°C, 44.2 g of lauryl alcohol was added dropwise to carry out the pre-polymerization reaction, and after the pre-polymerization reaction was completed, 1.8 g of catalyst 1 was added to catalyze the trimerization reaction. The NCO content of the system was measured by sampling. When the NCO content dropped to 9.51 wt%, the reaction was cooled to 25°C to continue the reaction. After about 95 hours, when the NCO content in the system dropped to 6.91 wt%, 2.1 g of DBP was added to the system, and after stirring for 1-2 hours, the reaction mixture was discharged to obtain comparative polyisocyanate 2.

### Comparative Example 3

477 g of DESMODUR^{®} T 100 was added to a four-neck brown reaction vessel with a condenser and a nitrogen inlet, the condensed water was turned on, and the stirring and heating device was turned on. The temperature rose to 60°C, 3.7 g of lauryl alcohol was added dropwise to carry out the reaction. When the NCO content reached 47.7 wt%, 480 g of butyl acetate was added, and the reaction was cooled to 40°C, and 1.0 g of catalyst 2 was added to catalyze the trimerization reaction. Every 12 hours, 0.4 g of DP30 was supplemented and the NCO content of the system was measured by sampling. After about 46 hours, when the NCO content in the system dropped to 7.56 wt%, 2 g of methyl p-toluene sulfonate was added to the system, and the temperature rose to 80°C and after stirring for 1-2 hours, the reaction mixture was discharged to obtain comparative polyisocyanate 3.

### Example 5

424.5 g of DESMODUR^{®} T 80 was added to a four-neck brown reaction vessel with a condenser and a nitrogen inlet. 0.52 g of antioxidant and 459 g of butyl acetate were added in sequence, the condensed water was turned on, and the stirring and heating device was turned on. When the temperature rose to 75°C, 2.94 g of catalyst 1 was added to the system to catalyze the trimerization reaction. The NCO content of the system was measured by sampling. When the NCO content dropped to 9.85 wt%, the reaction was cooled to 5°C. 48.2 g of lauryl alcohol was added dropwise to carry out the reaction. After the dropwise addition, the reaction was continued under stirring. When the toluene diisocyanate free monomer content of the system dropped to 0.1 wt% or less, 2.1 g of DBP was added to the system, and after stirring for 1-2 hours, the reaction mixture was discharged to obtain polyisocyanate 5.

### Example 6

170 g of DESMODUR^{®} T 80 was added to a four-neck brown reaction vessel with a condenser and a nitrogen inlet. 0.2 g of antioxidant and 177 g of butyl acetate were added in sequence, the condensed water was turned on, and the stirring and heating device was turned on. When the temperature rose to 75°C, 0.95 g of catalyst 1 was added to the system to catalyze the trimerization reaction. The NCO content of the system was measured by sampling. When the NCO content dropped to 9.40 wt%, the reaction was cooled to 25°C. 18.3 g of lauryl alcohol was added dropwise to carry out the reaction. After the dropwise addition, the reaction was continued under stirring. When the toluene diisocyanate free monomer content of the system dropped to 0.1 wt% or less, 1.1 g of DBP was added to the system, and after stirring for 1-2 hours, the reaction mixture was discharged to obtain polyisocyanate 6.

### Example 7

340 g of DESMODUR^{®} T 80 was added to a four-neck brown reaction vessel with a condenser and a nitrogen inlet. 0.4 g of antioxidant and 354 g of butyl acetate were added in sequence, the condensed water was turned on, and the stirring and heating device was turned on. When the temperature rose to 75°C, 1.9 g of catalyst 2 was added to the system to catalyze the trimerization reaction. The NCO content of the system was measured by sampling. When the NCO content dropped to 9.10 wt%, the reaction was cooled to 25°C. 36.7 g of lauryl alcohol was added dropwise to carry out the reaction. After the dropwise addition, the reaction was continued under stirring. When the toluene diisocyanate free monomer content of the system dropped to 0.1 wt% or less, 1.7 g of DBP was added to the system, and after stirring for 1-2 hours, the reaction mixture was discharged to obtain polyisocyanate 7.

### Comparative Example 4

477 g of DESMODUR^{®} T 80 was added to a four-neck brown reaction vessel with a condenser and a nitrogen inlet, the condensed water was turned on, and the stirring and heating device was turned on. The temperature rose to 60°C, 3.7 g of lauryl alcohol was added dropwise to carry out the reaction. When the NCO content of the system reached 47.7 wt%, 480 g of butyl acetate was added, and the reaction was cooled to 40°C, and 1.0 g of catalyst 2 was added to catalyze the trimerization reaction. Every 12 hours, 0.4 g of catalyst 2 was supplemented and the NCO content of the system was measured by sampling. After about 72 hours, when the NCO content in the system dropped to about 7.05 wt%, 2 g of methyl p-toluene sulfonate was added to the system, and the temperature rose to 80°C and after stirring for 1-2 hours, the reaction mixture was discharged to obtain comparative polyisocyanate 4.

### Comparative Example 5

398 g of DESMODUR^{®} T 80 was added to a four-neck brown reaction vessel with a condenser and a nitrogen inlet. 0.54 g of antioxidant and 440 g of butyl acetate were added in sequence, the condensed water was turned on, and the stirring and heating device was turned on. When the temperature rose to 55°C, 44.2 g of lauryl alcohol was added dropwise to the system to carry out the reaction, and after the pre-polymerization reaction was completed, 1.8 g of catalyst 1 was added to catalyze the trimerization reaction. After about 26 hours, when the NCO content of the system dropped to 7.30 wt %, 2.1 g of DBP was added to the system. The system was stirred for 1-2 hours, and cooled to 45°C, and then the reaction mixture was discharged to obtain comparative polyisocyanate 5.

### Comparative Example 6

408 g of DESMODUR^{®} T 80 was added to a four-neck brown reaction vessel with a condenser and a nitrogen inlet. 0.48 g of antioxidant and 425 g of butyl acetate were added in sequence, the condensed water was turned on, and the stirring and heating device was turned on. When the temperature rose to 75°C, 2.28 g of catalyst 1 was added dropwise to the system to catalyze the trimerization reaction. After about 22 hours, when the NCO content of the system dropped to 8.0 wt%, 1.8 g of DBP was added to the system. The system was stirred for 1-2 hours, cooled to 45°C, and then the reaction mixture was discharged to obtain comparative polyisocyanate 6.

### Comparative Example 7

146 g of DESMODUR^{®} T 80 was added to a four-neck brown reaction vessel with a condenser and a nitrogen inlet. 0.18 g of antioxidant and 152 g of butyl acetate were added in sequence, the condensed water was turned on, and the stirring and heating device was turned on. When the temperature rose to 75°C, 0.8 g of catalyst 1 was added dropwise to the system to catalyze the trimerization reaction. After about 19 hours, when the NCO content of the system dropped to 8.05 wt%, 0.8 g of DBP was added to the system, and 9.0 g of lauryl alcohol was added dropwise. The system was stirred for 1-2 hours, the reaction was cooled to 45°C, and then the reaction mixture was discharged to obtain comparative polyisocyanate 7.

Polyisocyanates of Examples 1-7 and Comparative Examples 1-7 were tested for various indices, including isocyanate group content, viscosity, solid component content, toluene diisocyanate monomer content, toluene tolerance and chromaticity value, which were listed in Table 1 and Table 2.

**Table 1: Specifications of polyisocyanates of Examples 1-4 and Comparative Examples 1-3**

| Polyisocyanat e | Exampl e 1 | Exampl e 2 | Exampl e 3 | Exampl e 4 | Comparati ve Example 1 | Comparati ve Example 2 | Comparati ve Example 3 |
|---|---|---|---|---|---|---|---|
| NCO content/wt% | 7.09 | 6.86 | 7.02 | 6.96 | 6.99 | 6.61 | 7.56 |
| Viscosity /mPa ·s | 633 | 458 | 760 | 560 | 323 | 1104 | 1332 |
| Solid component content/wt% | 50.0 | 49.3 | 51.4 | 50.1 | 49.6 | 51.7 | 50.5 |
| Color (Hazen) | 50 | 27 | 36 | 32 | 126 | 219 | 186 |
| Toluene diisocyanate free monomer content/wt% | 0.09 | 0.09 | 0.09 | 0.08 | 0.20 | 0.09 | 0.15 |
| Toluene tolerance mL/g | 8.9 | 6.2 | 4.1 | 5.0 | 6.9 | 9.5 | 1.3 |

The polyisocyanate systems of Examples 1-4 comprised those based on 2,4-toluene diisocyanate, and the polyisocyanates obtained by the reaction had a free toluene diisocyanate monomer content of less than 0.1 wt% and an isocyanate group content of 6.8 wt% or more, and had low viscosity, low color and excellent toluene tolerance.

Although the polyisocyanate systems of Comparative Examples 1-3 were also based on 2,4-toluene diisocyanate, they could not concurrently have the advantages of high isocyanate group content, low viscosity, low toluene diisocyanate free monomer content and high toluene tolerance.

The polyisocyanate obtained from Comparative Example 1, in step II of which the reaction was cooled to 42°C, had a toluene diisocyanate free monomer content of 0.2 wt%.

The urethanization reaction of lauryl alcohol and isocyanate was introduced before the trimerisation reaction in Comparative Example 2 and Comparative Example 3 to a greater or lesser degree. In Comparative Example 2, it needed about 80 hours of the low-temperature trimerization to reduce the free monomer content to less than 0.1 wt%, and the polyisocyanate had lower NCO content and higher viscosity and high color. In Comparative Example 3, after a very small amount of lauryl alcohol was introduced, the trimerization was carried out to obtain the polyisocyanate. When the solid content of the polyisocyanate was about 50 wt% and the NCO content was 7.56 wt%, the free monomer content of the polyisocyanate could only drop to 0.15 wt%, and the viscosity was high, the toluene tolerance was low and the color value was high.

It was surprisingly found in the present invention that carrying out the trimerization of the isocyanate at a certain temperature until the isocyanate group content reached a certain stage and then adding the organic monoalcohols to carry out the urethane modification and reducing the reactant temperature are helpful to obtain the polyisocyanate concurrently having high isocyanate group content, low free monomer content, low viscosity and high toluene tolerance.

**Table 2: Specifications of polyisocyanates of Examples 5-7 and Comparative Examples 4-7**

| Polyisocyanate | Exampl e 5 | Exampl e 6 | Exampl e 7 | Comparativ e Example 4 | Comparativ e Example 5 | Comparativ e Example 6 | Comparativ e Example 7 |
|---|---|---|---|---|---|---|---|
| NCO content/wt% | 6.93 | 7.04 | 6.84 | 7.05 | 7.30 | 8.00 | 7.06 |
| Viscosity /mPa· s | 470 | 678 | 941 | 7418 | 250 | 1000 | 4914 |
| Solid component content/wt% | 51.4 | 52.4 | 51.9 | 50.9 | 51.0 | 51.0 | 52.9 |
| Color (Hazen) | 27 | 50 | 45 | 112 | 35 | 45 | 46 |
| Toluene diisocyanate monomer content/wt% | 0.07 | 0.09 | 0.05 | 0.12 | 0.35 | 0.08 | 0.06 |
| Toluene tolerance mL/g | 3.7 | 3.2 | 3.1 | 0.3 | 5.0 | 1.0 | 1.8 |

The polyisocyanate systems of Examples 5-7 comprised a mixture (T80) based on 2,4-toluene diisocyanate and 2,6-toluene diisocyanate, and the polyisocyanates obtained by the reaction had a free toluene diisocyanate monomer content of less than 0.1 wt% and an isocyanate group content of 6.8 wt% or more, and the polyisocyanates had low viscosity, low color and excellent toluene tolerance.

In Comparative Example 4, after a very small amount of lauryl alcohol was introduced, the trimerization was carried out to obtain the polyisocyanate. When the solid content of the polyisocyanate was about 50 wt% and the NCO content was 7.05 wt%, the free monomer content of the polyisocyanate could only drop to 0.12 wt%, the viscosity could be as high as 7418 mPa·s, the toluene tolerance was low, and the color value was high.

In Comparative Example 5, a higher content of the monoalcohol was introduced to prepare the polyisocyanate with high toluene tolerance. It could be seen from the results that the toluene tolerance of the polyisocyanate was improved, but the toluene diisocyanate free monomer content was 0.35 wt%, and could not be reduced to 0.1 wt% or less.

Comparative Example 6 revealed that in the absence of any alcohols, the trimerization reaction of the isocyanate at a higher temperature can achieve that the polyisocyanate with 0.1 wt% or less of the free monomer, but the polyisocyanate had a very low toluene tolerance and a poor compatibility.

Compared with Comparative Example 6, Comparative Example 7 re-introduced the monoalcohol at a later stage, which not only failed to effectively improve the toluene tolerance of polyisocyanate, but also the viscosity increased.

It will be evident to those skilled in the art that the present invention is not limited to the details set forth, and that the present invention may be embodied in other specific forms without departing from the spirit or essential characteristics thereof. The present embodiments are therefore to be considered in all respects as illustrative and not limiting, and thereby the scope of the present invention is indicated by the appended claims rather than by the foregoing description; and moreover any changes, as long as it falls within the meaning and range of the equivalence to the claims, should be considered as a part of the present invention.

## Claims

1. A polyisocyanate prepared by the reaction of a system comprising an organic monohydroxy compound, toluene diisocyanate and a catalyst in an organic solvent, which has the following characteristics:
a. the isocyanate group content is not less than 6.8 wt%;
b. the toluene diisocyanate free monomer content is not more than 0.1 wt%;
c. toluene tolerance is not less than 3.0 ml/g; and
d. the viscosity is not more than 1000mPa·s;
the above weight percentages are relative to the total weight of the polyisocyanate.

2. The polyisocyanate according to claim 1, which is **characterized in that** the toluene tolerance of the said polyisocyanate is 3.0 mL/g-20.0 mL/g, preferably 4.0 mL/g-10.0 mL/g, most preferably 4.0 mL/g-9.0 mL/g.

3. The polyisocyanate according to claim 1 or 2, which is **characterized in that** the viscosity of the said polyisocyanate is 400 mPa·s-1000 mPa·s.

4. The polyisocyanate according to any of claims 1-3, which is **characterized in that** the amount of the said toluene diisocyanate is 20 wt%-70 wt%, further preferably 30 wt%-60 wt%, most preferably 40 wt%-50 wt%, relative to the total weight of the system.

5. The polyisocyanate according to any of claims 1-4, which is **characterized in that** the said organic monohydroxy compound is an organic monoalcohol, further preferably an organic monoalcohol having a carbon atom number of not less than 4, still preferably an organic monoalcohol having a carbon atom number of not less than 6, most preferably one or more of the following: decanol, dodecanol and an alkyl monoalcohol containing higher carbon atoms.

6. The polyisocyanate according to any of claims 1-5, which is **characterized in that** the amount of the said organic monohydroxy compound is 1 wt%-20 wt%, preferably 2 wt%-10 wt%, most preferably 2 wt%-6 wt%, relative to the total weight of the system.

7. A process for preparing the polyisocyanate according to any of claims 1-6, comprising:
I. reacting toluene diisocyanate and a catalyst in the presence of an organic solvent until the isocyanate group content of the reactants is 9 wt% to 11 wt%;
II. cooling the reactants to -5°C to 35°C and adding an organic monohydroxy compound, or adding an organic monohydroxy compound and cooling the reactants to -5°C to 35°C; and
III. continuing the reaction until the toluene diisocyanate free monomer content is not more than 0.1 wt% to terminate the reaction to obtain the polyisocyanate.

8. The process according to claim 7, which is **characterized in that** the catalyst is a trimerization catalyst.

9. The process according to claim 7 or 8, which is **characterized in that** the reaction temperature of the said step I is 45°C-85°C, most preferably 50°C-75°C.

10. The process according to any of claims 7-9, which is **characterized in that** in the said step II, the reactants are cooled to 5°C-30°C, most preferably the reactants are cooled to 15°C-30°C.

11. The process according to any of claims 7-10, which is **characterized in that** in the said step III, an reaction terminator is added to terminate the reaction.

12. A product, comprising the polyisocyanate according to any of claims 1-6.

13. The product according to claim 12, which is **characterized in that** the said product is selected from polyurethane coatings and polyurethane adhesives.

14. Use of the polyisocyanate according to any of claims 1-6 as the polyisocyanate component in the polyurethane coatings.

15. Use of the polyisocyanate according to any of claims 1-6 as a polyisocyanate component in a polyurethane adhesive.

16. A product, comprising the polyisocyanate obtained from the preparation with the process according to any of claims 7-11.
